Europäisches Patentamt

European Patent Office

Office européen des brevets

(19)

(11) Numéro de publication: **0 489 213 A1**

(12)

# DEMANDE DE BREVET EUROPEEN

(21) Numéro de dépôt: 90440116.3

(22) Date de dépôt: 05.12.90

(51) Int. Cl.5: **B01F 7/04**, B01F 15/00, B01F 13/06, A23L 3/16

(43) Date de publication de la demande:
10.06.92 Bulletin 92/24

(84) Etats contractants désignés:
AT BE CH DE DK ES GB GR IT LI LU NL SE

(71) Demandeur: **Dantan, Maurice**
**1 rue du Bout de Bas**
**F-27120 Jouy sur Eure(FR)**

(72) Inventeur: **Dantan, Maurice**
**1 rue du Bout de Bas**
**F-27120 Jouy sur Eure(FR)**

(74) Mandataire: **Arbousse-Bastide, Jean-Claude**
**Philippe**
**CABINET ARBOUSSE BASTIDE 20, rue de**
**Copenhague**
**F-67000 Strasbourg(FR)**

(54) **Procédé et dispositif pour le traitement thermique, notamment la cuisson, de produits fragiles tels que des préparations alimentaires.**

(57) Procédé et dispositif pour le traitement thermique de produits sensibles sous forme liquide ou pâteuse, notamment de produits alimentaires.

On soumet les produits à un cycle thermique sous atmosphère contrôlée dans une enceinte ou cuve (1) formant un corps de révolution associé à des moyens de chauffage et dont la directrice est faiblement inclinée par rapport à l'horizontale, le remplissage des produits restant inférieur à la moitié du volume de ladite cuve, la masse liquide ou pâteuse étant soumise à agitation par la rotation d'un agitateur à pale à rotation lente, le régime étant inférieur à 30 tours par minute, l'agitateur comportant au moins une pale et de préférence deux pales aptes à soulever une quantité limitée de produits, prélevée dans le fond de la cuve (1) et à le déverser dans la partie haute de cette dernière.

fig. 1

La présente invention concerne un procédé, et un dispositif permettant d'assurer dans des conditions optimales et parfaitement contrôlées le traitement thermique d'un produit notamment sous forme liquide ou pâteuse, tel qu'un produit alimentaire.

Plus spécialement l'invention concerne les opérations de cuisson intervenant dans la confection de préparations alimentaires fragiles telles que plats cuisinés, sauces, confitures, desserts, crèmes, soupes, concentrés aromatiques, etc..

L'invention utilise notamment les possibilités de la "cuisine sous vide", dont les avantages et les propriétés sont aujourd'hui bien connus, en permettant une cuisson à basse température évitant ainsi une dégradation des produits traités.

Par ailleurs le dispositif selon l'invention associant l'ensemble des moyens (récipients chauffés et ensemble de récupération des vapeurs) utiles pour le traitement thermique des produits, sera avantageusement couplé à des moyens de programmation permettant ainsi la mise en oeuvre du procédé et du dispositif selon l'invention pour réaliser un automate programmable propre à débiter, au terme d'un cycle de traitement thermique déterminé, les produits alimentaires terminés et susceptibles d'être conditionnés par portions individuelles.

Un autre objet de l'invention est de permettre la fabrication de produits alimentaires dans des conditions de totale aseptie et permettant par conséquent de débiter des produits stériles aptes à une conservation limitée ou prolongée suivant la nature des produits et la nature des traitements (pasteurisation, apertisation) introduits et programmés dans le cycle thermique de mise en oeuvre.

L'invention permet ainsi une utilisation dans un cadre industriel pour la réalisation par charge de produits alimentaires divers et énumérés ci-dessus, allant de préparations du type plats cuisinés à des produits du type conserves.

Mais l'invention est également utilisable pour la préparation in situ, notamment dans le cadre de restaurants, cantines, collectivités, etc... de préparations alimentaires en nombre important susceptible d'être consommées immédiatement ou éventuellement après une période de conservation par des moyens appropriés.

Un autre objet de l'invention est de permettre, à partir de certaines préparations, par exemple contenant une importante proportion de produits aromatiques volatiles, une récupération des arômes susceptibles d'être exploités et récupérés en vue de leur utilisation ultérieure ; ceci sera notamment le cas dans le traitement de produits végétaux tels que fruits ou légumes susceptibles de débiter au cours de leur traitement thermique en vue de la préparation de produits alimentaires terminés, d'importantes quantités d'arômes volatiles susceptibles de représenter une valeur marchande élevée et qui sont intégralement récupérés dans le cadre du dispositif et du procédé de l'invention.

Par ailleurs et selon une autre particularité de l'invention, les produits étant traités par charges discontinues, il est utile de pouvoir intégrer la préparation des aliments traités dans un cycle de temps aussi réduit que possible en raccourcissant par conséquent la durée du cycle thermique depuis la phase d'introduction jusqu'à la phase de sortie des produits.

L'invention permet par la mise en oeuvre de moyens autorisant de grandes surfaces d'échanges thermiques, des phases de montée en température ou de refroidissement considérablement réduites, avec une évacuation rapide des calories dans la phase de refroidissement.

L'invention permet en outre, par la mise en oeuvre de moyens mécaniques particulièrement étudiés, de respecter d'intégrité physique des produits en fournissant des préparations alimentaires dans lesquelles les produits de départ conservent leur structuration et sont ainsi reconnaissables par le consommateur.

A cet effet l'invention concerne en premier lieu un procédé pour le traitement thermique de produits sensibles sous forme liquide ou pâteuse, notamment de produits alimentaires, le procédé étant caractérisé en ce que l'on soumet les produits à un cycle thermique sous atmosphère contrôlée dans une enceinte ou cuve formant un corps de révolution associé à des moyens de chauffage et dont la directrice est faiblement inclinée par rapport à l'horizontale, le remplissage des produits restant inférieur à la moitié du volume de ladite cuve, la masse liquide ou pâteuse étant soumise à agitation par la rotation d'un agitateur à pales et à rotation lente, le régime étant inférieur à 30 tours par minute, l'agitateur comportant au moins une pale et de préférence deux pales aptes à soulever une quantité limitée de produit prélevée dans le fond de la cuve et à le déverser dans la partie haute de cette dernière.

L'invention concerne en second lieu un dispositif en vue de la mise en oeuvre du procédé ci-dessus et pour le traitement thermique sous atmosphère contrôlée de produits sous forme liquide ou pâteuse, notamment de produits alimentaires, ce dispositif étant caractérisé en ce qu'il comporte une cuve munie de moyens de chauffage et dont la forme générale épouse un volume de révolution dont la directrice est faiblement inclinée par rapport à l'horizontale, l'angle d'inclinaison étant inférieur à 30° et de préférence inférieur à 20° ; et en ce que la cuve comprend intérieurement un agitateur comportant au moins une pale formant une pelle elle-même pourvue d'une partie concave de ramassage et de déplacement des produits aptes à pénétrer dans la masse des produits par son bord formant arête, en évitant ainsi toute agression du milieu traité, la pale dans la partie ascendante de son parcours étant apte à déverser les produits prélevés vers la partie arrière de la cuve.

Selon un mode de réalisation de l'invention, la pale de l'agitateur et le mouvement de cette pale sont tels que l'arête de la partie concave de la pale pénétrant dans la masse liquide suit un parcours circulaire dont la tangente au point de contact est contenue dans un plan vertical.

De préférence encore, la pale de l'agitateur formant pelle est conformée de telle façon que l'arête au point de contact dans la zône de la pale pénétrant dans la masse liquide est de forme angulaire, la pointe étant tournée vers le bas et pénétrant en premier dans la masse liquide ou pâteuse en évitant ainsi toute perturbation du milieu traité.

Selon une autre particularité de l'invention la cuve de traitement thermique est de forme générale cylindrique et sa directrice est inclinée selon un angle compris entre 12 et 20° par rapport à l'horizontale, la cuve cylindrique comportant une double enveloppe parcourue par un fluide calo ou frigoporteur et constituant une jaquette de chauffage ou de refroidissement.

Selon une autre particularité de l'invention la cuve est en communication par sa partie haute avec une source de dépression permettant d'ajuster l'atmosphère du milieu traité.

Selon encore une autre particularité la ou les pales de l'agitateur comportent une partie concave de profil suivant sensiblement un segment de cylindre, de rayon faiblement inférieur à celui de la cuve cylindrique, et ladite concavité est apte à se déplacer pendant la partie immergée de son parcours concentriquement au fond de la cuve cylindrique et à proximité immédiate du fond en prélevant dans la masse des produits en cours de traitement une quantité limitée de produit prélevé dans le fond de la cuve et entrainé dans ladite concavité pendant la partie ascendante de son parcours.

Plus spécialement encore, ladite concavité est conformée de telle façon que pendant la partie de son parcours qui suit immédiatement son émergence du milieu liquide ou pâteux, la pale déverse vers la partie élevée de la cuve la quantité de produit contenue précédemment dans ladite concavité.

Plus spécialement encore, la ou les pales de l'agitateur comportent une première partie reliée directement à l'axe de rotation et sensiblement plane formant un plan de déversement des produits lors du parcours de la pale suivant l'émergence de cette dernière hors de la masse des produits, cette partie sensiblement plane étant conformée de telle façon que pendant la partie du parcours de la pale qui suit l'émergence des produits, cette partie plane de déversement soit inclinée vers la partie haute de la cuve en assurant par conséquent le déversement vers cette partie haute des produits qui ont été prélevés dans la partie antérieure du parcours de la pale notamment par la partie concave de cette dernière ; et cette partie plane formant plan de déversement est prolongée vers l'extérieur (par rapport à l'axe de rotation) par ladite partie concave.

Et plus spécialement encore, le plan de déversement est de forme générale triangulaire, un angle du triangle étant en position basse lorsque la pale est en position d'émergence par rapport au milieu, cet angle constituant le point de surverse des produits déversés depuis ladite pale, et ce plan de déversement triangulaire est prolongé vers l'extérieur par une concavité également triangulaire, dont un côté est adjacent aux côtés correspondants du plan de déversement, la pointe du triangle concave étant orientée vers l'extrémité et constituant la pointe de pénétration de la pale dans son parcours descendant pénétrant dans la masse des produits.

Plus spécialement encore, les moyens de mise sous vide et de contrôle de la pression au sein de la cuve sont reliés à cette dernière par un ensemble de récupération des vapeurs, et cet ensemble est constitué d'un manchon cylindrique communiquant avec la partie la plus élevée de la cuve cylindrique, le manchon traversant une zone de condensation par réfrigération au moyen d'une enveloppe extérieure parcourue par un liquide de réfrigération, le manchon débouchant au sommet d'une cheminée de récupération prolongée à son sommet par un cône de séparation secondaire concentrique et extérieure audit manchon, ce cône de séparation secondaire étant situé immédiatement en dessous de la zone de condensation, le sommet du cône étant en communication avec une source de dépression, les condensats provenant de la zone de condensation du manchon ou du cône de séparation secondaire étant récupéré à la base de ladite cheminée.

Et plus spécialement, la base du manchon comporte un boisseau conique d'angle correcpondant au cône de séparation secondaire, le boisseau définissant avec les parois de la partie inférieure de ce cône un passage en forme de couronne troconique limitant la vitesse d'appel des gaz depuis la source de vide.

Et plus spécialement encore, le sommet du cône de séparation secondaire comporte une source de réfrigération située immédiatement en amont de la sortie des gaz vers la source de dépression et provoquant une ultime condensation des produits les plus volatiles.

D'autres caractéristiques et avantages de l'invention ressortiront de la description qui suit et qui est donnée en rapport avec un mode de réalisation présenté à titre d'exemple non limitatif en se référant au dessin annexé, dans lequel :

- la figure 1 représente une vue schématique du montage du dispositif selon l'invention selon un plan longitudinal.

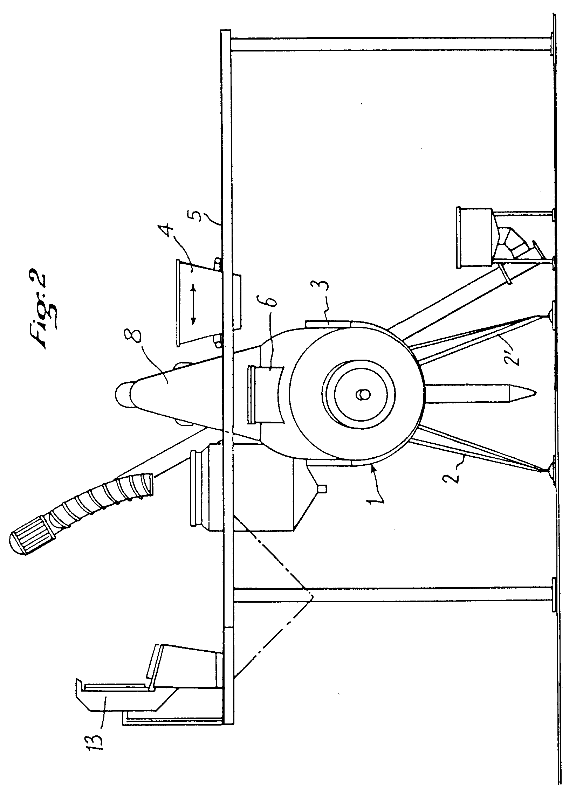

- - la figure 2 représente le dispositif de la figure 1 selon un plan transversal.
- la figure 3 représente une vue schématique de la forme et de la fonction de l'agitateur à deux pales.
- la figure 4 représente une vue de détail en perspective d'une pale de l'agitateur.
- la figure 5 représente une vue en coupe du dispositif de récupération asssocié à la cuve de l'invention.

Selon l'ensemble des figures on voit la cuve 1 de forme générale cylindrique et en position inclinée par rapport à l'horizontale, l'angle a formé par la directrice de la cuve cylindrique 1 par rapport à l'horizontal étant de l'ordre de 15°.

La cuve repose sur deux piétements 2 et 2' montés chacun sur un axe transversal permettant de basculer la cuve pour les besoins de son entretien ou pour ajuster l'angle d'inclinaison en fonction des besoins.

La cuve 1 comporte dans sa partie inférieure une enveloppe ou jaquette extérieure 3 qui reçoit la circulation d'un fluide calo ou frigoporteur suivant les phases du cycle thermique en cours.

La cuve 1 est alimentée par la trémie supérieure 4 montée sur des moyens de roulement 5 et pouvant déverser dans l'embouchure 6 les produits alimentaires préparés en vue d'être soumis au cycle de cuisson ou de préparation.

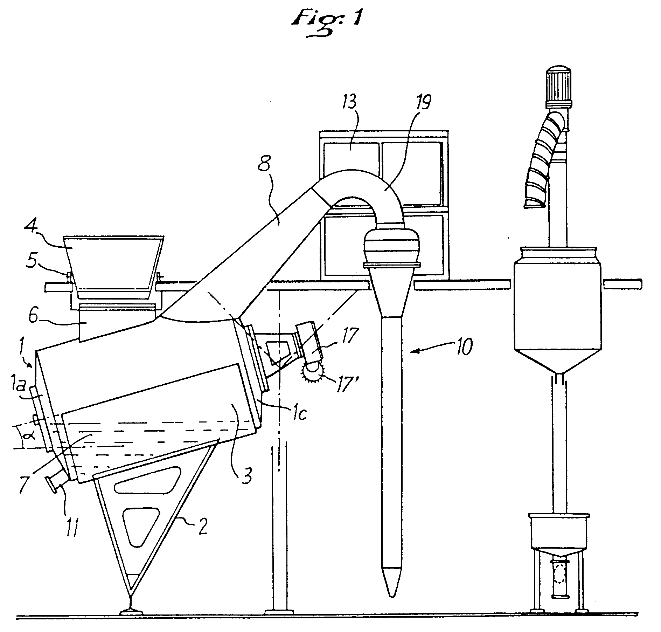

Comme on le voit sur la figure 1 le coefficient de remplissage de la cuve reste inférieur à la moitié et de préférence la surface des produits formant une masse liquide ou pâteuse contenue à l'intérieur de la cuve ne dépasse pas le plan horizontal contenant le diamètre de la base circulaire la de la cuve.

Dans ces conditions il apparaît que toute la partie des produits (référence 7 sur la figure 1) contenue dans la cuve se trouve bien dans la zone désservie par la jaquette thermique 3 en assurant par ailleurs une surface d'échange thermique importante entre la masse des produits et la paroi de la cuve.

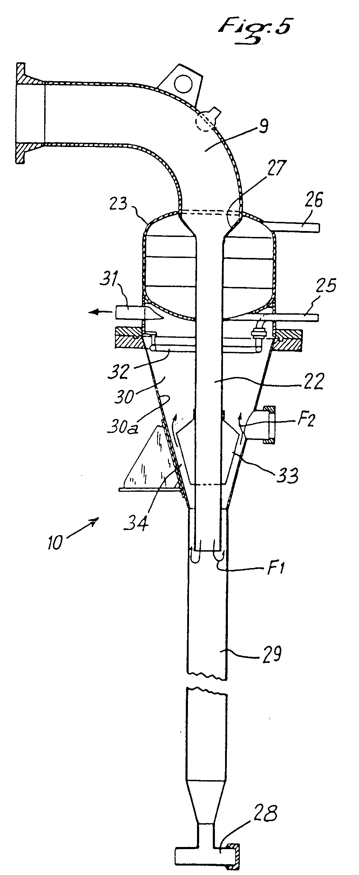

Dans la partie la plus élevée de la cuve la capacité intérieure de cette dernière se prolonge par une manche de désaération 8 se prolongeant après le coude 9 par le dispositif de récupération des vapeurs, référence 10 sur la figure 1 et représenté en détail sur la figure 5.

La sortie des produits liquides ou pâteux, y compris les phases ou éléments solides, s'effectue par l'évacuation 11 à la partie la plus basse de la cuve située sur la face cylindrique la.

L'ensemble de la cuve s'insère dans un environnement comportant une pluralité de moyens logistiques notamment les sources de liquide chaud et froid, les récipients conteneurs, malaxeurs ou autres appareils destinés à la préparation des ingrédients entrant dans la composition des formulations soumises aux opérations de cuisson, ces unités annexes relevant de la technique de l'homme de métier n'ayant pas besoin d'être plus avant décrite et étant introduit en fonction des programmes d'utilisation de l'appareillage.

On prévoit notamment dans cet environnement un ensemble de programmations électroniques et mettant en oeuvre des moyens informatiques à partir d'une console 12 permettant de programmer les moyens mécaniques intervenant dans les différentes phases de la mise en oeuvre du procédé et du fonctionnement de l'appareil.

Notamment dans ces phases intervient, outre les données liées au cycle thermique, l'agitation en vue de l'homogénéisation du milieu traité est constituée par les produits 7 au sein de la cuve.

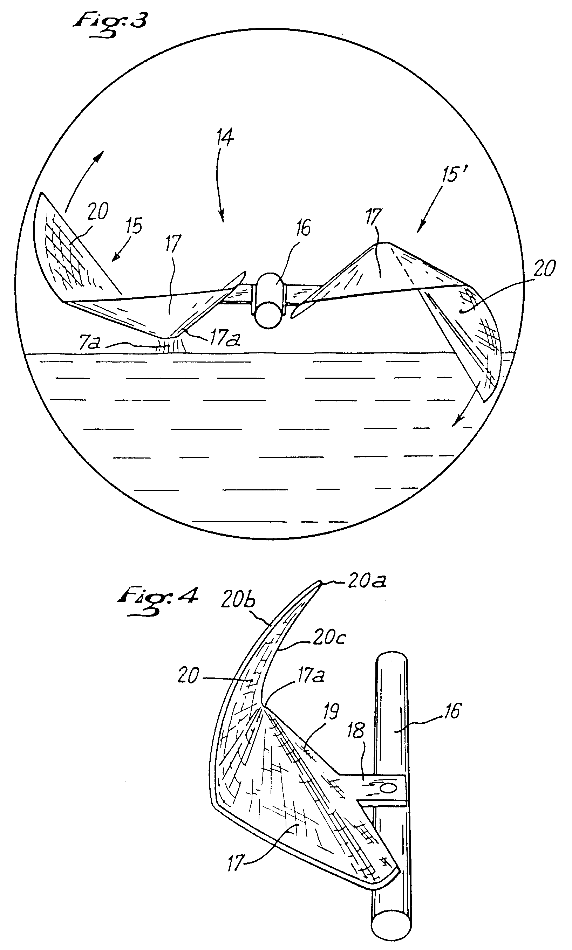

Cette agitation est obtenue par un agitateur 14 à deux pales symétriques 15 et 15' monté sur l'axe 16 (figure 3).

L'axe de rotation 16 est monté selon la directrice de la cuve cylindrique 3 et il est actionné par les pignons de renvoi 17, 17'.

Les deux pales de cet agitateur ont une géométrie caractéristique et qui constituent un élément important de la présente invention.

Une vue en perspective à la figure montre la configuration de cette pale 15 laquelle est montée sur l'arbre 16.

Et chaque pale comporte une partie proximale par rapport à l'arbre 16, cette partie proximale étant constituée d'une forme sensiblement triangulaire et plane 17.

Cette partie plane 17 constitue ainsi que l'on verra un plan de déversement pour ramener les produits prélevés dans la masse notamment à proximité du fond vers la partie haute de la cuve.

Ce plan de déversement 17 est monté solidaire de l'arbre 16 par la patte 18 à laquelle le plan 17 est rattaché par un rebord 19 qui s'oppose à un écoulement trop rapide des matières reprises dans la pale vers la partie centrale c'est-à-dire vers l'arbre 16.

Jouxtant ce plan de déversement 17 la pale se prolonge par une partie concave 20 elle-même de forme générale triangulaire et raccordée par un côté sur le côté adjacent du plan de déversement 17.

On voit ainsi notamment sur la figure 3 que chaque pale constitue une sorte de pelle qui s'enfonce (pale 15') dans la masse des produits 7.

Et le contact de la pale se fait par la pointe 20a qui représente l'extrémité avancée de la partie concave 20.

Comme on le voit sur la figure 3 le mouvement circulaire et rotatif de la partie concave 20 notamment de la pointe 20a lorsqu'elle pénètre et s'enfonce dans la masse des produits 7 suit un mouvement circulaire dans la tangente 21 au point de contact 21a est contenue dans un plan vertical c'est-à-dire orthogonal au plan horizontal formé par la surface des produits 7.

Ainsi la pénétration de la partie concave 20 de la pale se fait ponctuellement et l'arête formée par les deux côtés 20b, 20c pénètre progressivement dans la masse des produits en évitant tout contact agressif susceptible de perturber les produits et de rompre leur unité et leur structure.

On voit ainsi notamment sur la figure 3 que dans la partie descendante et en mouvement d'immersion de son parcours la pale 15' pénètre lentement et progressivement dans les produits et elle suit un parcours qui l'amène à proximité immédiate du fond 1b de la cuve en prélevant par conséquent dans cette zone, c'est-à-dire là où les échanges thermiques sont en cours, les produits qui viennent d'être réchauffés et la pale dans son mouvement ascendant ramène vers le haut une quantité limitée des produits ainsi retenue à l'intérieur de la forme générale de pelle de la pale ; lorsque la pale émerge de la surface des produits, la quantité de produit qu'elle contient est alors déversée par l'extrémité 17a du plan de déversement lequel dans le parcours ascendant de la pale est incliné vers l'arrière c'est-à-dire vers la section 1c cylindrique de la cuve.

Dans ces conditions le mouvement des pales qui s'effectue lentement avec un nombre de rotations inférieur à 30 par minute et pouvant descendre à quelques unités par minute, prélève constamment dans le fond de la cuve les produits qui sont ramenés lentement et sans perturbation vers la surface et vers la partie haute de la cuve en entraînant par conséquent une circulation et une homogénéisation régulière lente et non agressive de l'ensemble.

La géométrie concrète de la pale pourra être modifiée en fonction des besoins et notamment comporter des plis ou nervures de rigidification appropriées.

On comprend que sur la figure 3 les parties en cours d'écoulement selon la référence 7a ne sont représentées que pour les besoins de l'illustration ; dans la réalité et compte tenu du mouvement lent de rotation des deux pales de l'agitateur, le déversement se fait pratiquement dans la matière elle-même sans rupture dans la continuité du milieu et donc son choc hydraulique par un déplacement des masses en présence ce qui évite encore tout risque de détérioration et d'agression susceptible de détériorer l'intégrité des produits de nature fragile, par exemple les fruits, extraits végétaux, viande ou généralement tous ingrédients possédant une structure propre et qui se trouvent fragilisés par la cuisson.

Parmi les paramètres contrôlés depuis la console de commande figure notamment la pression maintenue au sein de la cuve.

A cet effet comme on l'a indiqué le sommet de cette dernière se trouve en communication par la manche 9 avec l'ensemble de récupération des vapeurs à partir d'un dispositif de mise sous vide.

Ce dispositif est représenté à la figure 5.

On voit que le coude 9 prolongeant la manche d'évacuation des vapeurs aboutit au manchon 22 dont le sommet est inséré dans l'enveloppe de réfrigération 23. Cette enveloppe 23 comportant des chicanes intérieures 24, 24' est en communication avec une arrivée 25 de fluide réfrigérant et une sortie 26 au sommet.

La communication entre le coude 9 et le manchon 22 se fait par un rétreint 27 qui provoque à ce niveau une mise en circulation giratoire des vapeurs au moment où l'effet de la refrigération se produit de sorte que l'on multiplie ainsi les contacts entre la vapeur circulant de façon giratoire et les surfaces froides du manchon 22 desservi par l'enveloppe 23.

Une première condensation se fait à ce niveau et les condensats ainsi formés tombant par le manchon 22 sont récupérés à la base 28 de la cheminée 29.

Le sommet de cette cheminée se prolonge vers le haut par le volume de séparation complémentaire ou de séparation secondaire 30.

Le sommet de ce cône de séparation secondaire 30 communique par la conduite 31 avec la source de dépression, laquelle en fonctionnement normal n'extrait que les gaz incondensables.

Une majorité importante des gaz ou vapeurs condensables a été récupérée à la base de la cheminée 29 ; une partie plus volatile est entraînée en suivant le circuit des flèches F1, F2 dans la partie supérieure du cône ; ces parties plus volatiles sont piégées à leur tour par la couronne réfrigérante 32 située immédiatement en amont de l'évacuation 31 vers la source de vide ; les parties volatiles ainsi condensées suivent les parois du cône et retombent dans la cheminée 29 où elles sont à leur tour récupérées.

Pour régler la pelle des gaz et vapeur depuis la source de vide à l'extrémité de la conduite 31 et le milieu traité à savoir l'enceinte formée par la cuve 1, on a prévu selon l'invention un boisseau 33 disposé concentriquement autour du manchon 22 et à proximité des parois inférieures du cône de séparation secondaire 30.

Ce boisseau 33 définit avec les parois 30a du cône 30 un passage 34 en forme de couronne tronconique restreignant par conséquent le passage entre la source de vide et la cuve et abaissant, par la perte de charge ainsi créée à ce niveau la vitesse de circulation des vapeurs depuis la cuve vers la source de vide.

On obtient ainsi une récupération maximum des principes volatiles aromatiques qui sont dégagés au cours du cycle thermique.

L'ensemble des données liées à la régulation de la pression depuis la source de vide étant ajusté constamment en fonction des paramètres constatés et en fonction du programme arrêté selon la nature des produits, depuis la console de programmation 13.

Il est clair que la pression est ajustée au sein de la cuve en fonction des besoins et que la dépression qui a été ici décrite peut être remplacée soit pour tout le cycle, soit pour une partie du cycle seulement par une mise à la pression atmosphérique ou par une pressurisation de valeurs convenables ; les données liées à la pression étant déterminées en fonction des caractéristiques du programme notamment en fonction de la température souhaitée et des caractéristiques des produits.

Le fonctionnement de l'appareil peut être présenté comme suit.

Le dispositif selon l'invention conjugue une cuve fixe fermée, étanche, stérile, pressurisable, de forme cylindrique inclinée 15° et d'un profil bipale à faible vitesse de rotation, réglable de 3 à 27 t/mn et à couple constant.

Comme la hauteur de produit se situe juste en dessous de l'arbre moteur, la masse au repos forme "un onglet cylindrique" dans la cuve, offrant une très grande surface au vide, permettant une meilleure désaération, plus grande évaporation que dans un cuiseur cylindrique.

Le profil étudié des pales de l'agitateur correspond à une forme géométrique composée dont les plis assurent une rigidité naturelle (autoportance). Leur définition dans l'espace et leur positionnement par rapport à l'axe moteur permet en rotation lente (3 à 27 t/mn).

On propose ainsi un déplacement de la masse en engendrant un effet de marée de produit, favorisant par coefficient d'agitation, l'échange thermique sans prise en charge du produit.

Les pales ne prennent qu'une quantité limitée de produit en charge sur un faible angle de rotation (environ 12°) et le déplacent par glissement en le soulevant de l'ensemble de la masse de produit. Ensuite de quoi les pales déversent ce produit pris en charge, en partie haute de la masse produit sans choc hydraulique, entretenant ainsi un mouvement de circulation lent et naturel (gravité).

Ainsi il n'y a pas opposition d'effet hydraulique sur le produit, ce qui préserve l'intégrité physique du produit tant en "cuisson pasteurisation" qu'en refroidissement.

Les temps de traitement sont variables suivant la nature des produits, mais les échanges au refroidissement ont été étudiés sur produits sucrés (nappages, confitures). Le dispositif refroidit 1 T de nappage en 20 mn de 105° à 32° C (t1 = 73) avec 40m$_3$/H d'eau à 18° (t2 = 3) ainsi K = 760 sur un produit visqueux au refroidissement et K = 1200 à 1600 suivant la viscosité du produit dans la phase de cuisson pasteurisation.

Les condensats aromatiques sont aspirés depuis la cuve par la manche 8 vers le coude 9 (à faible perte de charge) et sans zone turbulente. Les vapeurs sont conduites sous l'effet du vide dans une "coupelle de prérefroidissement". L'effet de giration améliore notablement le refroidissement des buées, et tend à séparer les incondensables des condensables. Les condensables sont précipités en partie inférieure de la manche de récupération.

Le lavage en place permet l'asepsie de l'appareil, il se nettoie comme un simple tube et permet des gains intéressants à la récupération des arômes (à noter : formation d'azéotropes avec l'eau).

L'invention permet ainsi de réaliser une enceinte polyvalente de traitement automatique pour produits fragiles et thermosensibles à fort pourcentage de M.S.S. (76° BRIX) et à forte viscosité 70.000 C.P. à 32°, utilisé plus généralement comme cuiseur refroidisseur sous vide primaire. Il assure des productions alimentaires ou connexes, en parfaite asepsie ; en récupérant et recyclant les condensats aromatiques d'évaporation.

Suivant le procédé de fabrication, il peut par exemple établir des barèmes :

- de cuisson imprégnation sous vide à basse température 30/40° (chauffage double enveloppe, vapeur 4 bars)
- d'évaporation avec récupération et recyclage des condensats aromatiques ;
- de pasteurisation 105°/110° en atmosphère contrôlée (après évacuation de l'air ambiant) ;
- de préstérilisation 135° maxi (idem à dito) ;
- de prérefroidissement par mise à la pression atmosphérique sous filtre bactériologique 99,99 %, puis "concentration prérefroidissement" par le vide avec récupération de condensats aromatiques.
- de refroidissement final par circulation d'eau en double enveloppe, débit 40 m$_3$/H maxi ;
- de vidange par gravité naturelle ou par pressurisation d'air stérile ou de gaz neutre.

L'ensemble peut être géré par automate programmable suivant les paramètres, températures, niveaux, pressions, dépressions, indices réfractométriques, poids (possibilité de pesage électronique 3 points par jauges de contraintes).

Les applications du dispositif selon l'invention peuvent être énumérées comme suit sans caractère limitatif :

CONFITURERIE :

Confitures avec gros morceaux de fruits, desserts de fruits, fruits entiers miscibles aux produits laitiers, baby food, purée de fruits, nappages pour crème glacée, nappages pour pâtisserie, fourrage (jusqu'à 76° brix).

PLATS CUISINES DE HAUT DE GAMME :

Saucier sous vide, imprégnateur, sauteuse sous vide, cuisson refroidissement sous vide (notamment associé à un dosage conditionnement sous vide pour la préparation de plats cuisinés surgelés).

CONSERVERIE DE LUXE :

Précuisson de plats cuisinés élaborés, blanchiment, cuisson imprégnation des champignons sylvestres (meilleur rendement), saumurage à chaud ou à froid, bisques de crustacés, soupes fraîches sous vide, sauces aromatiques.

RESTAURATION COLLECTIVE : Type 200 l BB et autres

Cuisson à basse température, voire pasteurisation de repas collectifs (à l'échelle d'un village, d'une usine, de grands chantiers).

Dans une version manuelle moins sophistiquée, "POLYVAC" peut être une solution intéressante, pour la cuisson de repas collectifs, dans certains pays du tiers monde (préparation à partir de produits locaux).

**Revendications**

1.  Procédé pour le traitement thermique de produits sensibles sous forme liquide ou pâteuse, notamment de produits alimentaires, caractérisé en ce que l'on soumet les produits à un cycle thermique sous atmosphère contrôlée dans une enceinte ou cuve formant un corps de révolution associé à des moyens de chauffage et dont la directrice est faiblement inclinée par rapport à l'horizontale, le remplissage des produits restant inférieur à la moitié du volume de ladite cuve, la masse liquide ou pâteuse étant soumise à agitation par la rotation d'un agitateur à pale à rotation lente, le régime étant inférieur à 30 tours par minute, l'agitateur comportant au moins une pale et de préférence deux pales aptes à soulever une quantité limitée de produits, prélevée dans le fond de la cuve et à la déverser dans la partie haute de cette dernière.

2.  Dispositif pour la mise en oeuvre du procédé selon la revendication 1, caractérisé en ce qu'il comporte une cuve (1) munie de moyens de chauffage et dont la forme générale épouse un volume de révolution dont la directrice est faiblement inclinée par rapport à l'horizontale, l'angle d'inclinaison étant inférieur à 30° et de préférence inférieur à 20° ; la cuve comportant intérieurement un agitateur (14) comportant au moins une pale (15, 15') formant une pelle elle-même pourvue d'une partie concave de ramassage et de déplacement des produits aptes à pénétrer dans la masse des produits par son bord (20c, 20b) formant arête en évitant ainsi toute agression du milieu traité (7), la pale dans la partie ascendante de son parcours étant apte à déverser les produits prélevés vers la partie arrière de la cuve.

3.  Dispositif selon la revendication 2, caractérisé en ce que la pale (15, 15') de l'agitateur (14) et le mouvement de cette pale sont tels que l'arête (20c, 20b) de la partie concave de la pale pénétrant dans la masse liquide (7) suit un parcours circulaire dont la tangente (20d) au point de contact est contenue dans un plan vertical.

4.  Dispositif selon la revendication 2 ou la revendication 3, caractérisé en ce que la pale (15) de l'agitateur formant pelle est conformée de telle façon que l'arête (20c, 20b) au point de contact dans la zône de la pale pénétrant dans la masse liquide est de forme angulaire, la pointe (20a) étant tournée vers le bas et pénétrant en premier dans la masse liquide ou pâteuse (7) en évitant ainsi toute perturbation du milieu traité.

5.  Dispositif selon l'une des revendications 2 à 4, caractérisé en ce que la cuve (1) de traitement thermique est de forme générale cylindrique et sa directrice est inclinée selon un angle compris entre 12 et 20° par rapport à l'horizontale, la cuve cylindrique comportant une double enveloppe (3) parcourue par un fluide calo ou frigoporteur et constituant une jaquette de chauffage ou de refroidissement.

6.  Dispositif selon l'une des revendications 2 à 5, caractérisé en ce que la cuve (1) est en communication par sa partie haute avec une source de dépression permettant d'ajuster l'atmosphère du milieu traité.

7.  Dispositif selon l'une des revendications 2 à 6, caractérisé en ce que la ou les pales (15, 15') de l'agitateur comportant une partie concave (20) de profil suivant sensiblement un segment de cylindre, de rayon faiblement inférieur à celui de la cuve cylindrique, et ladite concavité (20) est apte à se déplacer pendant la partie immergée de son parcours concentriquement au fond de la cuve (1) cylindrique et à proximité immédiate du fond en prélevant dans la masse des produits (7) en cours de traitement une quantité limitée de produit prélevé dans le fond de la cuve et entraîné dans ladite concavité pendant la partie ascendante de son parcours.

8.  Dispositif selon l'une des revendications 2 à 7, caractérisé en ce que ladite concavité (20) est conformée de telle façon que pendant la partie de son parcours qui suit immédiatement son émergence du milieu liquide ou pâteux, la pale (15) déverse vers la partie élevée de la cuve la quantité de produit contenue précédemment dans ladite concavité.

9.  Dispositif selon l'une des revendications 2 à 8, caractérisé en ce que la ou les pales (15, 15') de l'agitateur (14) comportent une première partie reliée directement à l'axe de rotation et sensiblement plane (17) formant un plan de déversement des produits lors du parcours de la pale suivant l'émergence de cette dernière hors de la masse des produits (7), cette partie sensiblement plane (17) étant conformée de telle façon que pendant la partie du parcours de la pale qui suit l'émergence des produits, cette partie plane de déversement soit inclinée vers la partie haute de la cuve en assurant par conséquent le déversement vers cette partie haute des produits qui ont été prélevée dans la partie antérieure du parcours de la pale notamment par la partie concave (20) de cette dernière ; ladite partie plane formant plan de déversement étant prolongée vers l'extérieur (par rapport à l'axe de rotation) par ladite partie concave (20)

10. Dispositif selon l'une des revendications 2 à 9, caractérisé en ce que le plan de déversement (17) est de forme générale triangulaire, un angle du triangle (17a) étant en position basse lorsque la pale est en position d'émergence par rapport au milieu, cet angle constituant le point de surverse des produits déversés depuis ladite pale ledit plan de déversement triangulaire étant prolongé vers l'extérieur par une concavité (20) également triangulaire, dont un côté est adjacent aux côtés correspondants du plan de déversement, la pointe du triangle (20a) concave étant orientée vers l'extrémité et constituant la pointe de pénétration de la pale dans son parcours descendant pénétrant dans la masse des produits.

11. Dispositif selon l'une des revendications 2 à 10, caractérisé en ce que les moyens de mise sous vide et de contrôle de la pression au sein de la cuve sont reliés à cette dernière par un ensemble de récupération des vapeurs (10), ledit ensemble étant constitué d'un manchon cylindrique (22) communiquant avec la partie la plus élevée de la cuve cylindrique, le manchon (22) traversant une zone de condensation (23) par réfrigération au moyen d'une enveloppe extérieure parcourue par un liquide de réfrigération, le manchon débouchant au sommet d'une cheminée (29) de récupération prolongée à son sommet par un cône (30) de séparation secondaire concentrique et extérieure audit manchon (22), ce cône de séparation secondaire étant situé immédiatement en dessous de la zone de condensation (23), le sommet du cône étant en communication avec une source de dépression, les condensats provenant de la zone de condensation du manchon ou du cône de séparation secondaire étant récupérés à la base (28) de ladite cheminée.

12. Dispositif selon la revendication 11, caractérisé en ce que la base du manchon (22) comporte un boisseau conique (33) d'angle correspondant au cône de séparation secondaire (30), le boisseau définissant avec les parois (30a) de la partie inférieure de ce cône (30) un passage en forme de couronne tronconique limitant la vitesse d'appui des gaz depuis la source de vide.

13. Dispositif selon l'une des revendications 11 ou 12, caractérisé en ce que le sommet du cône de séparation (30) secondaire comporte une source de réfrigération (32) située immédiatement en amont de la sortie des gaz vers la source de dépression et provoquant une ultime condensation des produits les plus volatiles.

Fig. 1

Fig. 2

EP 0 489 213 A1

Fig. 3

Fig. 4

Fig.5

Office européen
des brevets

**RAPPORT DE RECHERCHE EUROPEENNE**

Numero de la demande

EP   90 44 0116

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| E | FR-A-2 647 639  (DANTAN) <br> * Le document en entier * <br> --- | 1-13 | B 01 F    7/04 <br> B 01 F   15/00 <br> B 01 F   13/06 <br> A 23 L    3/16 |
| A | DE-A-2 554 642  (TONELLI) <br> * Le document en entier * <br> --- | 1,2,5,6 ,11 | |
| A | EP-A-0 092 494  (ANETAS) <br> * Figures * <br> --- | 3,4,7- 10 | |
| A | DE-A-3 604 333  (RIKER) <br> * Colonne 5, lignes 61-67; figures 2,9 * <br> --- | 1,2,5 | |
| A | PATENT ABSTRACTS OF JAPAN, vol. 11, no. 251 (C-440)[2698], 14 août 1987; & JP-A-62 57 638 (DAI ICHI KOGYO CO.) 13-03-1987 <br> --- | 1,2 | |
| A | US-A-3 751 010  (LATINEN) <br> * Revendications; figures 1-3 * <br> --- | 1,2 | |
| A | US-A-4 040 768  (CHRISTIAN) <br> * Abrégé; figures 1-3 * <br> --- | 1,2 | **DOMAINES TECHNIQUES RECHERCHES (Int. Cl.5)** <br><br> B 01 F <br> A 23 L |
| A | US-A-4 214 013  (HIRAHARA) <br> * Abrégé; figure 1 * <br> --- | 1,2 | |
| A | DE-A-3 217 638  (HASSHEIDER) <br> * Revendications 1-4; figures 1-3 * <br> ----- | 1,2 | |

Le présent rapport a été établi pour toutes les revendications

| Lieu de la recherche | Date d'achèvement de la recherche | Examinateur |
|---|---|---|
| LA HAYE | 04-07-1991 | SCHOELVINCK T.S. |